# EUROPÄISCHE PATENTSCHRIFT

(11) **EP 4 754 401 B1**
(45) Veröffentlichungstag und Bekanntmachung des Hinweises auf die Patenterteilung: **11.11.2026**
(21) Anmeldenummer: 25737115.3
(22) Anmeldetag: 10.06.2025
(51) Int. Cl.: F16B 2/22, F16B 5/01, F16B 5/06, F16B 21/08

(54) **ARRETIERUNGSKNOPFVERBINDUNG ZUR LÖSBAREN VERBINDUNG MINDESTENS ZWEIER FLÄCHIGER PLATTEN**
LOCKING BUTTON CONNECTION FOR DETACHABLY CONNECTING AT LEAST TWO FLAT PANELS
LIAISON PAR BOUTON DE VERROUILLAGE POUR RELIER DE MANIÈRE DÉTACHABLE AU MOINS DEUX PANNEAUX PLATS

(30) Priorität: 12.06.2024 DE 102024116485
(43) Veröffentlichungstag der Anmeldung: 10.06.2026
(73) Patentinhaber: Montara Verpacken mit System GmbH, 09603 Großschirma ST Siebenlehn (DE)
(72) Erfinder: UMLAUF, Frank, 01099 Dresden (DE)
(74) Vertreter: Hofmann, Klaus
(86) Internationale Anmeldenummer: PCT/DE2025/100569
(87) Internationale Veröffentlichungsnummer: WO 2025/256705

(56) Entgegenhaltungen:
- DE-A1- 2 901 213
- DE-B- 1 211 032
- GB-A- 818 548

## Beschreibung

Die Erfindung betrifft einen Transport- und Lagerbehälter aus Hohlkammerplatten mit einer Arretierungsknopfverbindung zur lösbaren Verbindung mindestens zweier flächiger Platten. Der Arretierungsknopf ist in ausgesparte Montagelöcher der Platten einsetzbar.

Ein bevorzugtes Einsatzgebiet sind lösbare Verbindungen für Transport- und Lagerbehälter aus Plattenmaterial mit faltbaren oder beweglichen Behälterklappen oder inneren, zu befestigenden Behältereinsätzen. Besonders vorteilhaft ist der Arretierungsknopf für Plattenmaterial aus 2 Deckplatten und zwischenliegenden Stegen bestehenden Hohlkammerplatten einsetzbar. Auch die Befestigung von Werbetafeln an geeigneten Untergründen ist ein denkbares Einsatzgebiet.

Das Plattenmaterial besteht vorzugsweise aus thermoplastischem Kunststoff, beispielsweise Polypropylen (PP). Die Platten sollten aus Materialien mit einem inneren Rückstellvermögen bestehen, wobei das Material selbst (z.B. Schäume) oder die Form nachgebend und rückstellbar ist, beispielsweise durch innere Stege, wie bei Hohlkammerplatten. Für Behälter aus Wellpappe ist eine Verwendung ebenfalls geeignet, jedoch sind bei Wellpappe aufgrund dessen begrenztem Rückstellvermögen die Anzahl der Verwendungen begrenzt. Der Arretierungsknopf kann auch für unterschiedliche Plattenmaterialstärken eingesetzt werden.

Derartige Transport- und Lagerbehälter werden insbesondere dort eingesetzt, wo Bauteile im Rahmen eines Herstellungs- oder Versendungsprozesses transportiert oder zwischengelagert werden sollen. Beispielhaft sei hier der Transport von Fahrrädern von einem Hersteller zu einem Händler genannt. Diese Transportbehälter bestehen üblicherweise aus Wellpappen, die verklebt, verschweißt oder formschlüssig miteinander verbunden sind. Aus Kostengründen und aus Gründen des Umweltschutzes sind wiederverwendbare Behälter anzustreben, die eine Mehrfachnutzung ermöglichen. Dabei ist neben einer ausreichenden Tragkraft und Lebensdauer auch wichtig, dass die Behälter möglichst keine Vorsprünge oder Absätze aufweisen, die den Innenraum einengen oder anderweitig hinderlich sind.

Für die Beschickung der Lager- und Transportbehälter müssen Klappen oder bewegliche Elemente für mehr oder weniger lange Zeit so gehalten werden, dass eine ausreichend feste Verbindung entsteht, die möglichst mit einfachen Mitteln wieder lösbar ist. Das gleiche gilt für die Zeit des Transportes an einen Zielort.

Bekannt ist, dass Klappen oder bewegliche Elemente von Lager- und Transportbehältern mittels Klettband fixiert werden können. Für eine kurzzeitige oder dauerhafte Fixierung von Klappen oder festen Einsätzen sind Zusatzstoffe, z.B. Kleber, Heißluft oder Spezialwerkzeuge, z.B. Ultraschall-Schweißtechnik, erforderlich. Der Einsatz mehrteiliger Druckknöpfe aus Kunststoff oder Metall ist ebenfalls bekannt. Nachteilig ist dabei meist, dass durch den Einsatz verschiedener Stoffe die Recyclingfähigkeit beeinträchtigt wird. Die eingesetzten Teile verschleißen schnell oder verlieren ihre Arretierfähigkeit bei häufiger Anwendung. Der Einsatz von mehrteiligen Druckknöpfen verlangt geringe Fertigungstoleranzen.

Mit einer aus einem Druckknopf und einer Drucköse bestehenden Druckknopfverbindung können Plattenteile auf einfache Weise zusammen oder an Wände oder Decken geknöpft werden. Es ist eine relativ unsichtbare und jederzeit wieder lösbare Verbindung.

DE 10 019 542 A1 beschreibt beispielhaft eine Transporteinrichtung für Zweiräder, insbesondere für Rennräder und Bikes, in der ein Gestell zur Aufnahme der Teile eines Zweirades angeordnet ist. Im Inneren werden die Einsätze mittels eines Klettverschlussbandes im Kasten gehalten. Der Deckel ist um Scharniere über die Längsseite des Kastens mittels abschließbarer Hebelverschlüsse mit dem Kasten verbunden.

DE 9 200 411 U1 bezieht sich auf einen Transportbehälter für Zweiräder, insbesondere Fahrräder, der durch Einschwenken von Wandteilen in gegenseitige flache Anlage aus einer kastenförmigen Nutzungsstellung in eine kompakte Aufbewahrungsstellung zusammenklappbar ist. Der Behälter ist mit lösbaren Verriegelungsteilen zur Lagesicherung der verschwenkbaren Wandteile versehen. Die Verriegelung erfolgt durch schwenkbare Teile, die in eine Verriegelungsaufnahme einrastbar sind.

In DE 1 866 661 U werden Verpackungskästen beschrieben, bei denen beispielsweise Hartfaser- oder ähnliche Platten an den Stoßsteilen gebohrt und durch Druckknopfverbinder beweglich miteinander verbunden werden.

EP 0 006 993 A2 beschreibt einem aus Kunststofffolie durch Tiefziehen geformten Behälter, bei dem die Verbindung der beiden Behälterteile miteinander durch ineinander drückbare und druckknopfartig zusammenwirkende Verbindungsteile hergestellt werden soll. Die ineinander geschobenen Verbindungsteile wirken bei ihrem Ineinanderstecken noch nicht druckknopfartig und können zylindrisch sein. Wenn beide Teile zusammengesteckt sind, wird durch gemeinsames Eindrücken der Kopfbereiche der ineinander gesteckten Verbindungsteile eine Aufweitung dieser Kopfbereiche erzielt, so dass die beiden Verbindungsteile formschlüssig miteinander verbunden sind. Vorzugsweise sind im Kopfbereich parallel zur Einsteckrichtung verlaufende Sicken vorgesehen, die die Dehnbarkeit des Kopfbereiches fördern. Besonders bevorzugt ist eine kegelstumpfförmige bzw. gewölbte Gestalt des Kopfendes der Verbindungsteile.

In DE 20 2021 003 284 U1 wird eine Kunststoffverpackung beschrieben, die aus einem Behälter und einem Deckel mit mindestens einer als Originalitätsverschluss ausgebildeten Verrastung zwischen Behälter und Deckel besteht, die dadurch gebildet wird, dass am Deckelrand eine Lasche mit einer Einformung, die einen Hinterschnitt (19) aufweist, angeordnet ist und dass im Behälterrand ein Durchbruch mit strahlenförmigen Stanzlinien vorhanden ist, in den der Hinterschnitt einrastet und dass rings um die Einformung eine Schwächungslinie vorgesehen ist.

DE 8 708 417 U1 beschreibt eine Verpackung, die insbesondere für Kompaktdisks oder dergleichen vorgesehen ist, wobei die Verpackung einen Behälter sowie mindestens einen offenbaren Deckel aufweist. Der Deckel ist mit dem Behälter mittels wenigstens einer Sicherungsverbindung verschließbar, die druckknopfartig in eine Sicherungsnoppe einer Verriegelungsöffnung einrastet.

DE 29 01 213 A1 beschreibt eine lösbare Stiftverbindung für Bauelemente, insbesondere für die Befestigung einer Abdeckung an einem Schaltschrank einer Niederspannungsanlage. Der Schaft des Stiftes ist durch seine federnden Schenkel kraftschlüssig in der Aufnahmeöffnung des zweiten Bauelements gehalten und zusätzlich durch die das zweite Bauelement hintergreifenden Nasen formschlüssig festgelegt.

In DE 26 26 140 A1 wird ein Befestigungselement für Abdeckplatten beschrieben, insbesondere Kofferraumabdeckungen in Kraftfahrzeugen. Das Befestigungselement ist 3-teilig ausgebildet. Es besitzt zwei identische, in einer Aufnahmebohrung der Abdeckplatte montierbare Buchsenteile mit sperrklinkenförmig ausgebildeten Rastnasen sowie einen Kugelkopf aufweisenden Stift. Dieser Stift ist zum Einschnappen in der Rastmulde durch einen rechteckigen Ausschnitt eines Buchsenteiles einführbar.

Die vorgenannten Lösungen stellen keine geeignete Lösung dar, um eine ausreichend feste und dauerhafte Verbindung von Teilen eines Lager- und Transportbehälters für einen längeren Transport zu erreichen. Oft wird die Recyclingfähigkeit durch den Einsatz verschiedener Stoffe beeinträchtigt oder es liegen ein hoher Verschleiß und/oder eine nachlassende Arretierfähigkeit bei häufiger Anwendung vor. Mehrteilige Druckknopfverbindungen verlangen meist geringe Fertigungstoleranzen.

Aufgabe der Erfindung ist es, eine Arretierungsknopfverbindung zur lösbaren Verbindung mindestens zweier flächiger Platten vorzuschlagen, wobei die Platten Hohlkammerplatten sind, mit dessen Hilfe eine feste und einfach wieder lösbare Verbindung ohne Spezialwerkzeuge oder Verbrauchsstoffe ermöglicht wird. Der einsetzbare Arretierungsknopf soll einfach ausgebildet sein und durch möglichst wenig Vorsprünge und Absätze den Innenraum sowie die Außenseite der Platten wenig begrenzen oder einengen. Die Herstellung soll möglichst einfach und kostengünstig sein. Die Montage sowie die Demontage sollen mit wenig Aufwand möglich sein sowie die Wiederverwendung eingesetzter Teile ermöglichen.

Erfindungsgemäß wird die Aufgabe durch die Merkmale des Anspruches 1 gelöst. Ausgestaltende Merkmale sind in den Unteransprüchen 2 bis 6 beschrieben.

Die Erfindung beschreibt einen Transport- und Lagerbehälter aus Hohlkammerplatten mit einer Arretierungsknopfverbindung zur lösbaren Verbindung mindestens zweier flächiger Platten.

Die Hohlkammerplatten bestehen aus 2 Deckplatten (16) und zwischenliegenden Stegen (17).

Der erfindungsgemäße Arretierungsknopf ist in im Plattenmaterial ausgesparten Montagelöchern einsetzbar. Der Arretierungsknopf besteht im Wesentlichen aus einem runden Formteil, welches durch Verbindung verschiedener zylinderförmiger Abschnitte die zu verbindenden Platten einklemmt.

Der Arretierungsknopf ist ein zylinderförmiger Grundkörper, der in 5 Bereiche A, B, C, D und E eingeteilt ist.

Der Bereich A wird durch einen Außenzylinder gebildet, dessen Durchmesser größer als der lichte Durchmesser eines Montageloches in einer ersten zu montierenden Platte ist. Das Montageloch ist vorzugsweise rund ausgebildet. Der Außenzylinder dient als Anschlag, ähnlich eines Schraubenkopfes, damit der Arretierungsknopf nicht durch das Montageloch rutschen kann.

Der anschließende Bereich B ermöglicht die Aufnahme einer ersten Platte derart, dass dessen Durchmesser gleich oder kleiner als der lichte Durchmesser des Montageloches ist. Je näher der Durchmesser des Bereiches B am Durchmesser des Montageloches ist, umso weniger Spiel besitzt diese Verbindung und umso stabiler wird diese Verbindung. Die horizontale Länge dieses Bereiches entspricht mindestens der Dicke der ersten zu montierenden Platte.

Im Bereich C sind mindestens teilweise am Umfang angeordnete Rastnasen vorgesehen. Es hat sich als vorteilhaft erwiesen, dass statt einer einzigen durchgängigen mehrere einzelne Rastnasen vorgesehen sind.

Der Durchmesser des Bereiches C ist wie der des Bereiches B gleich oder kleiner als der lichte Durchmesser des Montageloches. Die Rastnasen sind in Richtung des Außenzylinders nahezu senkrecht ausgebildet, damit die Innenwand der ersten zu haltenden Platte fest anliegt und gehalten wird. In gegengesetzter Richtung, also in Richtung des Bereiches D, ist die Fläche der Rastnase schräg ausgebildet. Dadurch wird erreicht, dass das Eindrücken des Arretierungsknopfes in das Montageloch leicht und mit wenig Kraftaufwand erfolgen kann. In einer bevorzugten Ausführung besitzen die Rastnasen eine seitliche Abflachung. Durch diese Abflachung kann eine Montage durch Drehung des gesamten Arretierungsknopfes in das Montageloch vereinfacht werden.

Der Bereich D ist für die Aufnahme einer oder mehrerer zu befestigten weiteren Platte ausgebildet, wobei dessen Durchmesser gleich oder kleiner als die lichte Weite einer Montageaussparung in einer zweiten Platte ist.

Der Bereich E wird durch eine Rastwulst gebildet, die in die Montageaussparung der zweiten zu befestigenden Platte einsteckbar ist. Diese Rastwulst besitzt einen Durchmesser, der größer ist als die geringste lichte Weite der Montageaussparung. Dadurch und durch seitliche Fasen an der Rastwulst, kann ein einfaches und festes einklipsen hinter oder in die Montageaussparung erfolgen.

Die Länge des Bereiches D so kurz ausgebildet ist, dass die Rastwulst (6) im Bereich der Stege (17) der äußersten Platte einrastbar ist.

Die Länge des Bereiches D kann unterschiedlich lang ausgebildet sein, je nachdem wie viele Platten miteinander verbunden werden sollen. Bei zwei Platten kann die Rastwulst außerhalb der Montageaussparung liegen. Bei mehr als zwei Platten kann die Länge des Bereiches D aber auch so groß ausgebildet sein, dass die Rastwulst außerhalb der Montageaussparung der äußersten Platte liegt.

In einer bevorzugten Ausführung besitzt der Arretierungsknopf eine vom Außenzylinder her zugängliche Werkzeugaufnahme. Diese dient der Erstmontage und ggf. der Demontage des Arretierungsknopfes. Die Werkzeugaufnahme kann übliche Werkzeuge, wie Vierkant- oder Sechskantschlüssel (Inbus, Torx) oder Schraubenzieher (Kreuz- oder Langloch), aufnehmen. Vorteilhaft dabei ist, dass sich der gesamte Arretierungsknopf mit einfachen Mitteln drehen und in das Montageloch oder die Montageaussparung eindrehen lassen. Dadurch wird das Eindrücken des Arretierungsknopfes, das Einrasten der Rastnasen, das Einklippen der Rastwulst sowie ggf. eine Entfernung des Arretierungsknopfes erleichtert. Als besonders vorteilhaft hat sich erwiesen, wenn die Rastnasen dabei eine seitliche Abflachung besitzen.

Wenn der Außenzylinder eine nach außen gerichtete, abflachende Fase aufweist, weist die fertige Verbindung sehr wenig Vorsprünge auf. Je weniger störende Kanten vorhanden sind, umso weniger wird der benötigte Platz beeinträchtigt und umso geringer ist die Verletzungsgefahr.

Der Arretierungsknopf wird vorzugsweise ein Kunststoffformteil sein, beispielsweise ein PP-Spritzgussteil. Arretierungsknöpfe aus Metall sind ebenfalls möglich.

Nachfolgend wird die Erfindung an Ausführungsbeispielen näher erläutert. Es zeigen
- Fig. 1: Schnitt durch einen Arretierungsknopf
- Fig. 2: Schnitt durch eine Arretierungsknopfverbindung für 2 Hohlkammerplatten
- Fig. 3: Arretierungsknopf - Ansicht von Innenseite
- Fig. 4: Arretierungsknopf - Ansicht von Außenseite
- Fig. 5: Hohlkammerplatte mit einem runden und einem rechteckigen Montageloch
- Fig. 6: Hohlkammerplatte mit Arretierungsknopf Innenseite
- Fig. 7: Hohlkammerplatte mit Arretierungsknopf Außenseite
- Fig. 8: montierter Arretierungsknopf von Innenseite
- Fig. 9: montierter Arretierungsknopf von Außenseite
- Fig. 10: Anwendung an einem Grossladungsträger

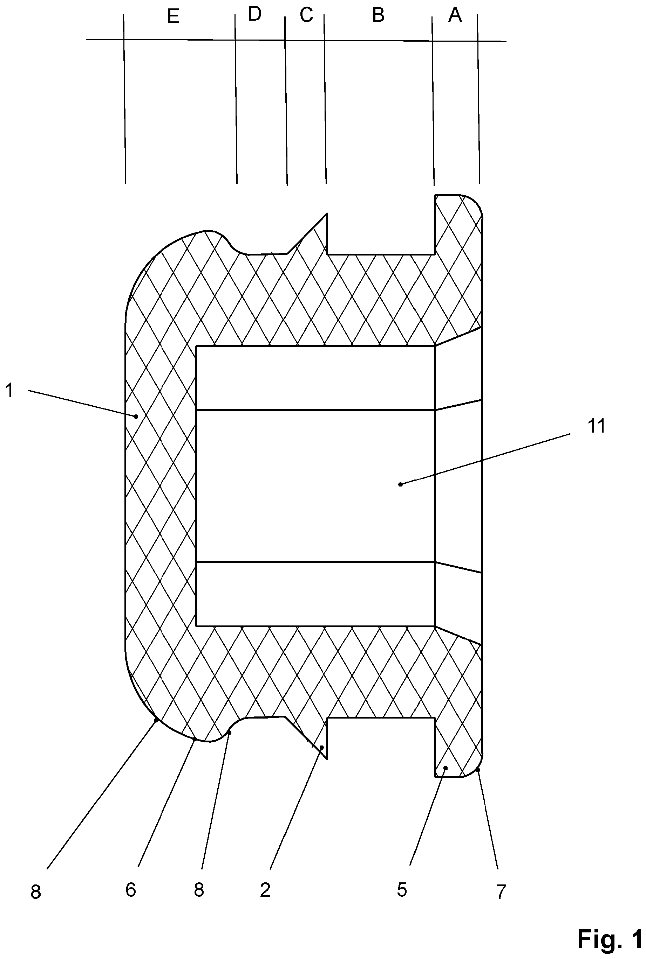

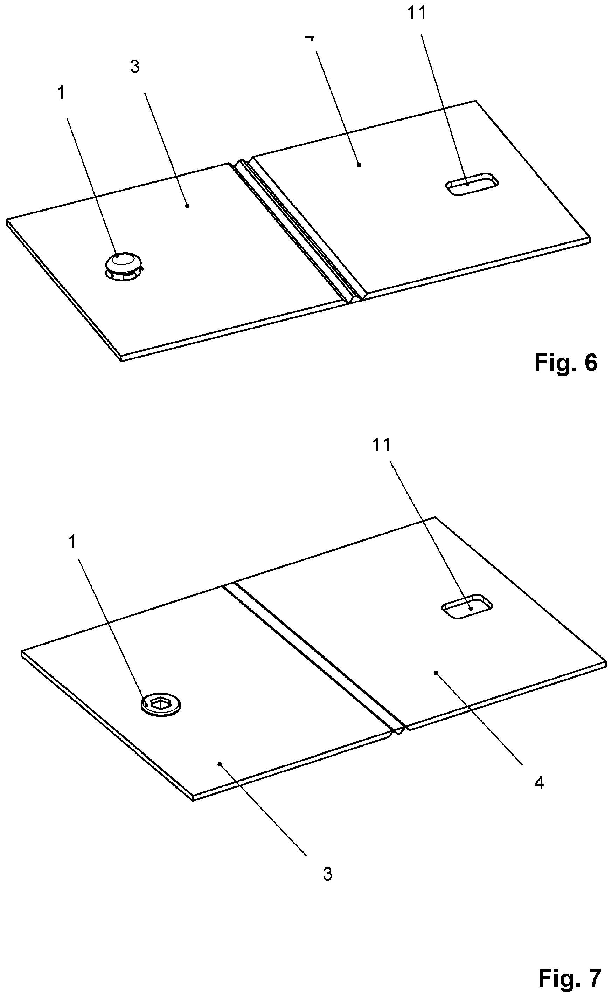

Bei den nach den Fig. 1 bis 10 beschriebenen Ausführungsbeispielen handelt es sich um einen lösbaren Verschlussmechanismus mittels eines Arretierungsknopfes 1 für zwei flächige Platten. Die Platten bestehen aus Materialien mit einem Form- oder Materialrückstellvermögen. Im gewählten Beispiel soll es sich um Hohlkammerplatten handeln.

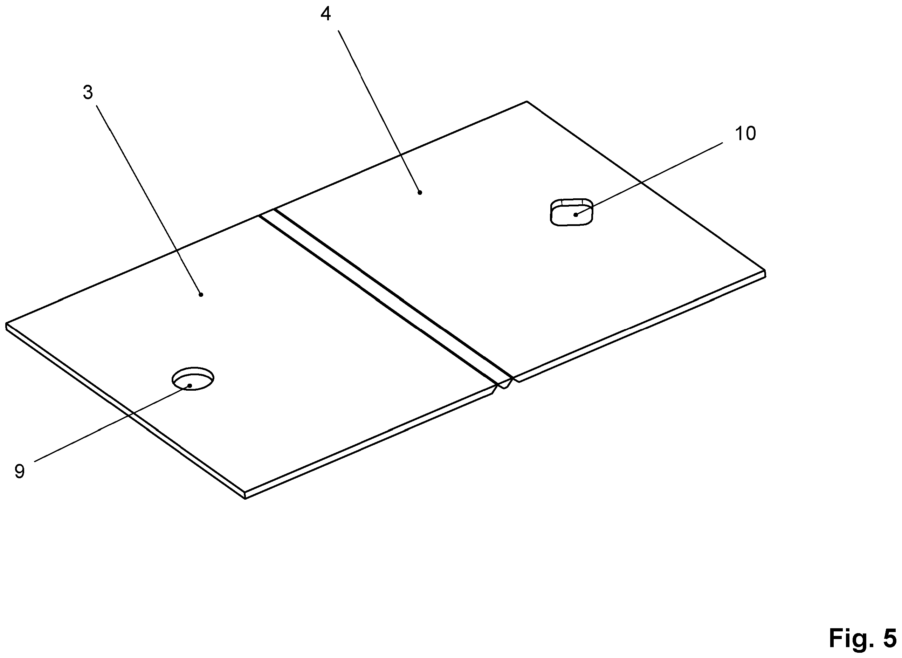

Wie in den Fig. 5 bis 9 dargestellt, verbindet der Arretierungsknopf 1 ebenflächig eine erste Platte 3 lösbar mit einer zweiten Platte 4. Der Arretierungsknopf 1 ist in im Plattenmaterial ausgesparten Montagelöchern 9 und gegenüber liegend in Montageaussparungen 10 einsetzbar.

Der Arretierungsknopf 1 besteht aus einem runden Spritzgussformteil, bei dem durch Verbindung verschiedener zylinderförmiger Bereiche eine Plattenverbindung ermöglicht wird, indem bestimmte Teile des Arretierungsknopfes 1 das Material oder die Form der zu verbindenden Teile so verändern, dass ein ausreichender Widerstand ein Herausrutschen des Arretierungsknopfes 1 verhindert. Das zu verbindende Plattenmaterial ist so gewählt, dass sich nach dem Lösen der Klemmung der ursprüngliche Zustand nahezu von selbst wieder einstellt.

Der Arretierungsknopf 1 ist ein zylinderförmiger Grundkörper, der in 5 Bereiche A, B, C, D und E eingeteilt ist.

Der Bereich A wird durch einen Außenzylinder 5 gebildet, dessen Durchmesser größer als der lichte Durchmesser eines Montageloches 9 in einer zu montierenden ersten Platte 3 ist. Das Montageloch 9 ist im Beispiel nach den Fig. 5 bis Fig. 9 rund ausgebildet. Der Außenzylinder 5 dient als Anschlag, damit der Arretierungsknopf 1 nicht durch das Montageloch 9 rutschen kann.

Der anschließende Bereich B ermöglicht die Aufnahme einer ersten Platte 3 derart, dass dessen Durchmesser gleich oder kleiner als der lichte Durchmesser des Montageloches 9 ist. Die horizontale Länge dieses Bereiches entspricht der Dicke der zu montierenden ersten Platte 3.

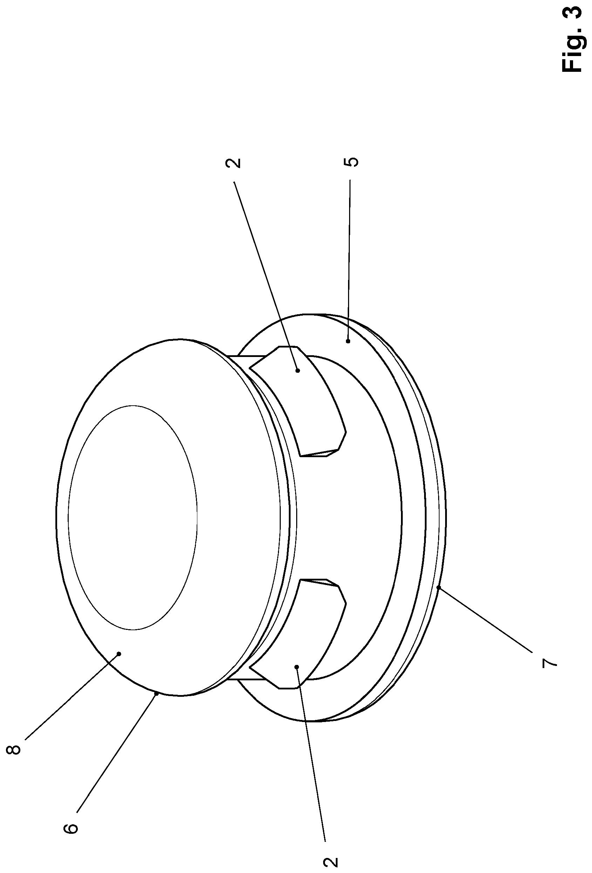

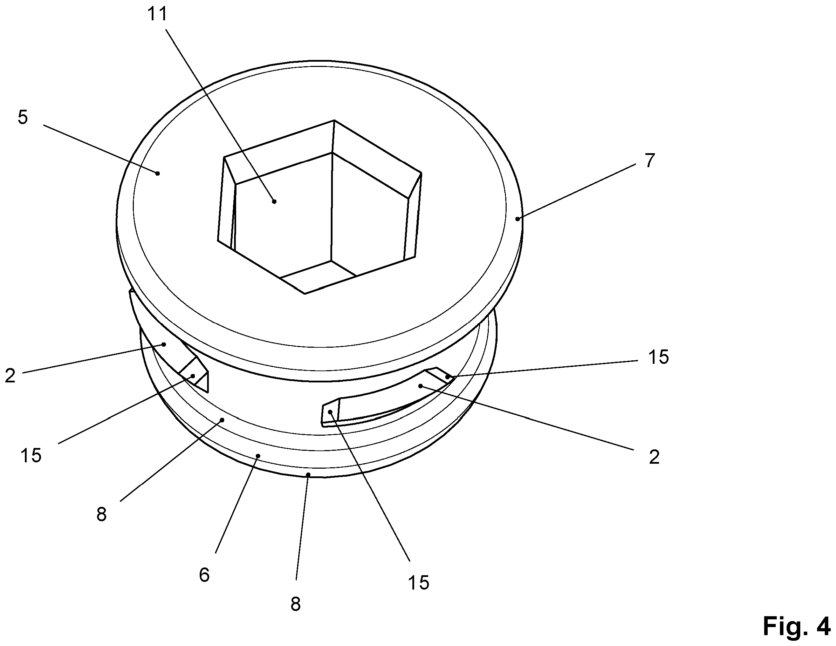

Nach Fig. 3 sind im Bereich C vier am Umfang angeordnete Rastnasen 2 vorgesehen. Der Durchmesser des Bereiches C ist wie der des Bereiches B gleich dem lichten Durchmesser des Montageloches 9. Die Rastnasen 2 sind in Richtung des Außenzylinders senkrecht ausgebildet. In entgegengesetzter Richtung des Bereiches D ist die Fläche der Rastnase 2 schräg ausgebildet. In der nach Fig. 3 und 4 dargestellten Ausführung besitzen die Rastnasen 2 eine seitliche Abflachung 15. Durch diese Abflachung 15 wird eine Montage durch Drehung des gesamten Arretierungsknopfes in das Montageloch vereinfacht.

Der Bereich D ist für die Aufnahme einer zu befestigten zweiten Platte 4 ausgebildet. Dessen Durchmesser ist gleich der lichten Weite einer Montageaussparung 10 in der zweiten Platte 4.

Der Bereich E wird durch eine Rastwulst 6 gebildet, die in die Montageaussparung 10 der zu befestigenden zweiten Platte 4 einsteckbar ist. Diese Rastwulst 6 besitzt einen Durchmesser, der geringfügig größer ist als die lichte Weite der Montageaussparung 10. Dadurch und durch seitliche Fasen 8 an der Rastwulst 6 kann ein einfaches und festes einklipsen hinter die Montageaussparung 10 erfolgen.

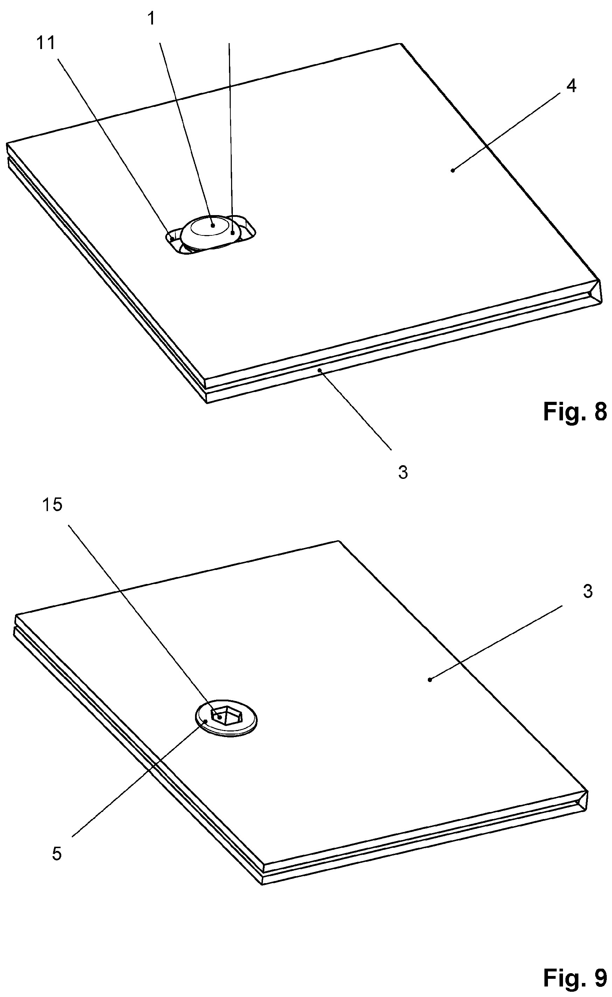

Bei den in den Fig. 8 dargestellten zwei Platten ist die Länge des Bereiches D so gewählt, dass die Rastwulst 6 innerhalb der Montageaussparung 10 liegt. Bei mehr als zwei Platten kann die Länge des Bereiches D aber auch so groß ausgebildet sein, dass die Rastwulst 6 außerhalb der Montageaussparung 10 der äußersten Platte liegt.

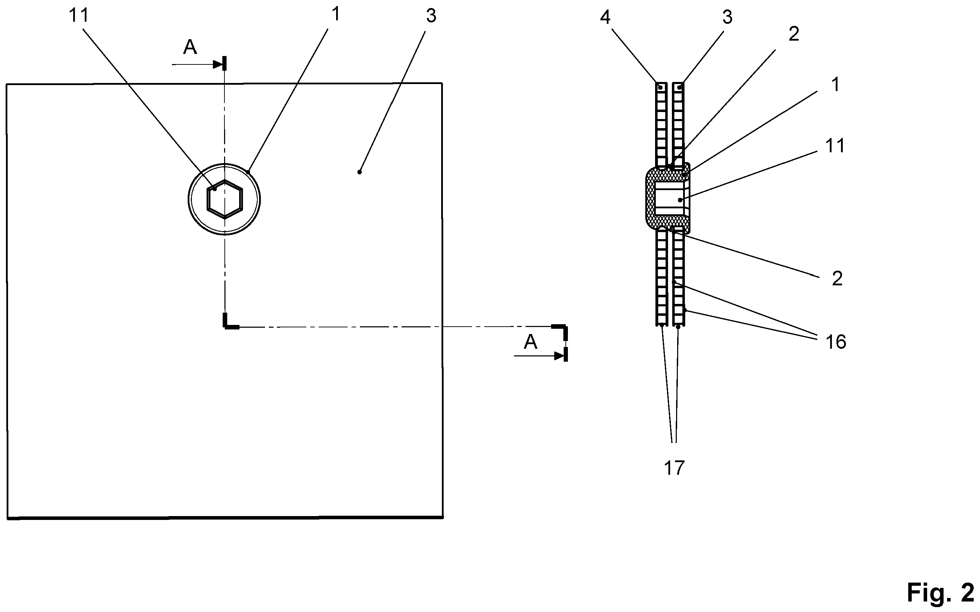

Bei der bevorzugten Verwendung für Plattenmaterial aus 2 Deckplatten 16 und zwischenliegenden Stegen 17, also Hohlkammerplatten, kann die Länge des Bereiches D so kurz ausgebildet sein, dass die Rastwulst 6 im Bereich der Stege 17 der äußersten zu befestigenden Platte einrastbar ist. Im Bereich dieser Stege 17 befindet sich sehr wenig Plattenmaterial, so dass diese Öffnung die Rastwulst 6 aufnehmen kann oder etwas Stegmaterial leicht durch die Rastwulst 6 verdrängt werden kann. Der besondere Vorteil dieser Ausführung ist es, dass der Arretierungsknopf 1 nicht oder nur sehr wenig über die zweite bzw. innerste Platte 4 hinausragt und wenig oder keine störenden Vorsprünge entstehen. In Fig. 2 hingegen befindet sich die Rastwulst 6 etwas weiter außen im Bereich der Deckplatte 16.

Bei der in Fig. 1 bis 4 dargestellten Ausführung besitzt der Arretierungsknopf 1 eine vom Außenzylinder 5 her zugängliche Werkzeugaufnahme 11.

Nach Fig. 1, 3 und 4 weist der Außenzylinder 5 eine nach außen gerichtete, abflachende Fase 7 auf.

Die Montage des Arretierungsknopfes 1 kann beispielsweise wie folgt erfolgen.

Bei der Erstmontage wird vor der Nutzung der Arretierungsknopf 1 mit der ersten Platte 3 fest verbunden. Dazu wird in der ersten Platte 3 ein Montageloch 9 eingebracht. Der Arretierungsknopf 1 wird dann, je nach Plattenhärte, werkzeuglos mit der Oberseite zuerst eingeschoben oder zusätzlich mit dem entsprechenden Werkzeug mittels der Werkzeugaufnahme 11 eingedreht. Anschließend rastet die erste Platte 3 unter den Rastnasen 2 im Bereich B des Arretierungsknopfes 1 ein.

In die zweite Platte 4 wird dann eine Montageaussparung 10 mit dem gewünschten Durchmesser bzw. der gewünschten Form eingebracht.

Nach Übereinanderlegen des montierten Arretierungsknopfes 1 und der Montageaussparung 10 der zweiten Platte 4 kann durch Aufbringung von Druckkraft auf eine oder beide Platten die Verbindung beider Platten geschlossen werden. Durch leichte Zugkraft an einer Platte oder gegeneinander gerichtete Kraft auf beide Platten kann dieser wieder geöffnet werden.

Der Durchmesser eines Montageloches 9 und einer Montageaussparung 10 können bei beiden Platten unterschiedlich ausfallen, sodass auch die Durchmesser des Arretierungskopfes 1 in den Bereichen B, C und D variieren können. Der Durchmesser des Bereiches E und die Fase 8 an der Rastwulst 6 können abhängig von Plattenmaterial und der gewünschten Rückhaltekraft gewählt werden. Die Fase 7 am Außenzylinder 5 sowie der Durchmesser des Bereiches A werden abhängig von der gewünschter Lage des Arretierungsknopfes 1 gewählt. Die Größe der Rastnasen 2 und deren Position im Bereich C ist abhängig vom gewählten Plattenmaterial. Die Höhe aller Bereiche ist abhängig von der Plattendicke, dem gewünschtem Spiel zwischen den Platten und der gewünschter Exposition des Arretierungsknopfes 1.

Nach dem Lösen der Plattenverbindung verbleibt der Arretierungsknopf 1 in der ersten Platte 3, um für einen erneuten Verschluss sofort wieder verfügbar zu sein.

Die enthaltene Werkzeugaufnahme 11 ist hier als Innen-Sechskant ausgebildet. Durch eine Veränderung der Form und Größe der Montageaussparung kann die Stärke der Verbindung und die Positionstoleranz eingestellt werden, rund für eine starke Verbindung und wenig Positionstoleranz, quadratisch für mittelstarke Verbindung und mittlere Positionstoleranz und rechteckig für wenig starke Verbindung und große Positionstoleranzen. Je größer die Montageaussparung ist im Vergleich zum Durchmesser des Bereiches D, umso weniger stark ist die Verbindung und die Rückhaltekraft. Wird die Montageaussparung 10 beispielsweise bei einer Hohlkammerplatte nicht komplett durchgestanzt, es bleibt also die Außenseite der Hohlkammerplatte ohne Öffnung, so kann der Arretierungsknopf 1 so weit eingesteckt werden, dass er von der Gegenseite nicht sichtbar ist.

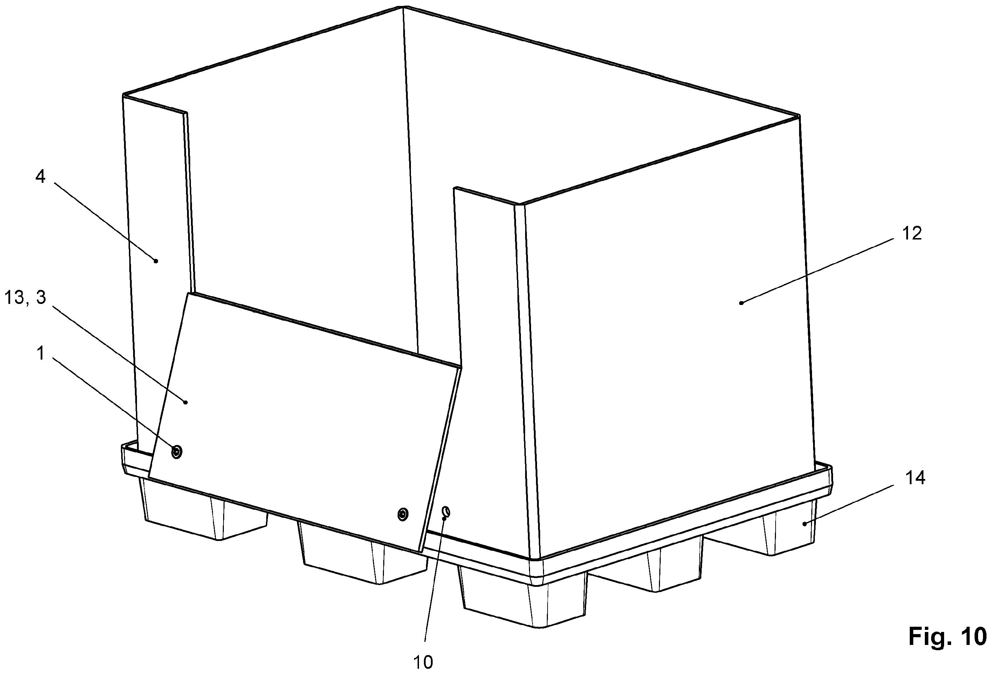

In Fig. 10 ist eine mögliche Anwendung in einem als Großladungsträger 12 ausgebildeten Transport- und Lagerbehälter zum Transport von Fahrzeugteilen zu einem Hersteller dargestellt. Er besteht aus einer Palette 14, auf der ein Behälterteil aus 5mm dicken Kunststoff-Hohlkammerplatten mit zwei Seitenwänden und zwei Stirnwänden befestigt ist. An der Stirnseite befindet sich eine Klappe 13, die zur Beladung klappbar ausgebildet ist. In der Klappe 13 sowie in der Stirnwand sind Montageaussparungen vorhanden, in die jeweils ein Arretierungsknopf 1 einsteckbar ist. Der Großladungsträger kann mit einer Behälterabdeckung verschlossen werden.

Mit Hilfe der erfindungsgemäßen Arretierungsknopfverbindung ist ein lösbarer Verbindungsmechanismus zwischen mehreren Platten durch eine einfache Montage mittels einer klebefreien und schweißfreien Verbindung möglich. Die Verbindung ist sowohl demontierbar als auch wieder verwendbar. Die zu montierenden Bauteile sind in Einzelanwendung gegeneinander verdrehbar. Platten-Gegenstücke lassen sich leicht austauschen. Der Arretierungsknopf 1 selbst ist einfach in vielen Materialien herstellbar, beispielsweise durch Drucken oder Spritzgießen. Er lässt sich einfach recyceln, insbesondere wenn noch das Arretierungsknopfmaterial da gleiche ist wie das Plattenmaterial. Fertigungstoleranzen lassen sich mit der hier dargestellten Verbindung leicht ausgleichen.

### Bezugszeichenaufstellung

- 1: Arretierungsknopf
- 2: Rastnase
- 3: erste Platte
- 4: zweite Platte
- 5: Außenzylinder
- 6: Rastwulst
- 7: Fase an Außenzylinder
- 8: Fasen an Rastwulst
- 9: Montageloch
- 10: Montageaussparung
- 11: Werkzeugaufnahme
- 12: Grossladungsträger
- 13: Klappe
- 14: Palette
- 15: Abflachung
- 16: Deckplatte
- 17: Stege

- A: Bereich A
- B: Bereich B
- C: Bereich C
- D: Bereich D
- E: Bereich E

## Patentansprüche

1. Transport- und Lagerbehälter aus Hohlkammerplatten mit einer Arretierungsknopfverbindung zur lösbaren Verbindung mindestens zweier flächiger Platten, die in ausgesparte Montagelöcher der Platten einsetzbar ist, wobei die Platten aus 2 Deckplatten (16) und zwischenliegenden Stegen (17) bestehen, mit folgenden Merkmalen:
- der Arretierungsknopf (1) ist ein zylinderförmiger Grundkörper mit 5 Bereichen A, B, C, D und E,
- der Bereich A wird durch einen Außenzylinder (5) gebildet, dessen Durchmesser größer als der lichte Durchmesser eines Montageloches (9) in einer ersten Platte (3) ist,
- der Bereich B ermöglicht die Aufnahme einer ersten Platte (3) derart, dass dessen Durchmesser gleich oder kleiner als der lichte Durchmesser des Montageloches (9) ist und dessen Länge mindestens der Dicke der ersten Platte (3) entspricht,
- im Bereich C, dessen Durchmesser gleich oder kleiner als der lichte Durchmesser des Montageloches (9) ist, sind mindestens teilweise am Umfang angeordnete Rastnasen (2) vorgesehen, welche in Richtung des Außenzylinders (5) nahezu senkrecht und in gegengesetzter Richtung schräg ausgebildet sind,
- der Bereich D ist für die Aufnahme einer zu befestigten zweiten Platte (4) oder weiterer Platten ausgebildet, wobei dessen Durchmesser gleich oder kleiner als die lichte Weite einer Montageaussparung (10) in einer zweiten Platte (4) oder weiteren Platte ist,
- der Bereich E wird durch eine Rastwulst (6) mit seitlichen Fasen (8) gebildet, die in die Montageaussparung (10) der zweiten Platte (4) einsteckbar ist, wobei die Rastwulst (6) einen Durchmesser besitzt, der größer ist als die geringste lichte Weite der Montageaussparung (10) und
- die Länge des Bereiches D so kurz ausgebildet ist, dass die Rastwulst (6) im Bereich der Stege (17) der äußersten Platte einrastbar ist.

2. Transport- und Lagerbehälter nach Anspruch 1, **dadurch gekennzeichnet, dass** der Arretierungsknopf (1) eine vom Außenzylinder (5) zugängliche Werkzeugaufnahme (11) besitzt.

3. Transport- und Lagerbehälter nach Anspruch 1 oder 2, **dadurch gekennzeichnet, dass** die Rastnasen (2) eine seitliche Abflachung (15) besitzen.

4. Transport- und Lagerbehälter nach einem der Ansprüche 1 bis 3, **dadurch gekennzeichnet, dass** der Außenzylinder (5) eine nach außen gerichtete Fase (5) aufweist.

5. Transport- und Lagerbehälter nach einem der Ansprüche 1 bis 4, **dadurch gekennzeichnet, dass** der Arretierungsknopf (1) ein Kunststoffformteil ist.

6. Transport- und Lagerbehälter nach einem der Ansprüche 1 bis 5, **dadurch gekennzeichnet, dass** die Länge des Bereiches D so ausgebildet ist, dass die Rastwulst (6) außerhalb der Montageaussparung (10) liegt.

## Claims

1. Transport and storage container composed of hollow-chamber plates, with an arresting-button connection for releasably connecting at least two flat plates, which is insertable into cut-out mounting holes of the plates, wherein the plates consist of 2 cover plates (16) and interposed webs (17), having the following features:
- the arresting button (1) is a cylindrical base body with 5 regions A, B, C, D and E,
- the region A is formed by an outer cylinder (5) whose diameter is larger than the clear diameter of a mounting hole (9) in a first plate (3),
- the region B allows a first plate (3) to be received such that its diameter is equal to or smaller than the clear diameter of the mounting hole (9) and its length corresponds at least to the thickness of the first plate (3),
- in the region C, whose diameter is equal to or smaller than the clear diameter of the mounting hole (9), provision is made of latching noses (2) arranged at least partially on the circumference, which latching noses are formed so as to be almost perpendicular in the direction of the outer cylinder (5) and so as to be oblique in the opposite direction,
- the region D is configured to receive a second plate (4) to be fastened or further plates, wherein its diameter is equal to or smaller than the clear width of a mounting cutout (10) in a second plate (4) or further plate,
- the region E is formed by a latching bead (6) with lateral bevels (8) that is pluggable into the mounting cutout (10) of the second plate (4), wherein the latching bead (6) has a diameter which is larger than the smallest clear width of the mounting cutout (10), and
- the length of the region D is configured to be so short that the latching bead (6) is able to be latched into place in the region of the webs (17) of the outermost plate.

2. Transport and storage container according to Claim 1, **characterized in that** the arresting button (1) has a tool receptacle (11) which is accessible from the outer cylinder (5).

3. Transport and storage container according to Claim 1 or 2, **characterized in that** the latching noses (2) have a lateral bevel (15).

4. Transport and storage container according to one of Claims 1 to 3, **characterized in that** the outer cylinder (5) has an outwardly directed bevel (5).

5. Transport and storage container according to one of Claims 1 to 4, **characterized in that** the arresting button (1) is a plastic moulding.

6. Transport and storage container according to one of Claims 1 to 5, **characterized in that** the length of the region D is configured such that the latching bead (6) is situated outside the mounting cutout (10).

## Revendications

1. Récipient de transport et de stockage constitué de panneaux à chambre creuse comportant une liaison par bouton de verrouillage pour la liaison détachable d'au moins deux panneaux plats, laquelle peut être insérée dans des trous de montage évidés des panneaux, dans lequel les panneaux sont constitués de 2 panneaux de recouvrement (16) et d'éléments jointifs intermédiaires (17), présentant les caractéristiques suivantes :
- le bouton de verrouillage (1) est un corps de base cylindrique doté de 5 zones A, B, C, D et E,
- la zone A est formée par un cylindre extérieur (5) dont le diamètre est supérieur au diamètre intérieur d'un trou de montage (9) dans un premier panneau (3),
- la zone B permet la réception d'un premier panneau (3) de sorte que son diamètre soit inférieur ou égal au diamètre intérieur du trou de montage (9) et que sa longueur corresponde au moins à l'épaisseur du premier panneau (3),
- dans la zone C, dont le diamètre est inférieur ou égal au diamètre intérieur du trou de montage (9), des ergots d'encliquetage (2) disposés au moins partiellement sur la périphérie sont prévus, lesquels sont formés presque perpendiculairement dans la direction du cylindre extérieur (5) et de manière oblique dans la direction opposée,
- la zone D est formée pour la réception d'un deuxième panneau (4) ou d'autres panneaux à fixer, dont le diamètre est inférieur ou égal à la largeur intérieure d'un évidement de montage (10) dans un deuxième panneau (4) ou un autre panneau,
- la zone E est formée par un bourrelet d'encliquetage (6) doté de chanfreins latéraux (8), qui peut être introduit dans l'évidement de montage (10) du deuxième panneau (4), dans lequel le bourrelet d'encliquetage (6) présente un diamètre qui est supérieur à la plus petite largeur intérieure de l'évidement de montage (10) et
- la longueur de la zone D est réalisée de manière suffisamment courte pour que le bourrelet d'encliquetage (6) puisse être encliqueté dans la zone des éléments jointifs (17) du panneau le plus à l'extérieur.

2. Récipient de transport et de stockage selon la revendication 1, **caractérisé en ce que** le bouton de verrouillage (1) présente un logement d'outil (11) accessible depuis le cylindre extérieur (5).

3. Récipient de transport et de stockage selon la revendication 1 ou 2, **caractérisé en ce que** les ergots d'encliquetage (2) présentent un aplatissement latéral (15).

4. Récipient de transport et de stockage selon l'une des revendications 1 à 3, **caractérisé en ce que** le cylindre extérieur (5) présente un chanfrein (5) dirigé vers l'extérieur.

5. Récipient de transport et de stockage selon l'une des revendications 1 à 4, **caractérisé en ce que** le bouton de verrouillage (1) est une pièce moulée en matière synthétique.

6. Récipient de transport et de stockage selon l'une des revendications 1 à 5, **caractérisé en ce que** la longueur de la zone D est réalisée de telle sorte que le bourrelet d'encliquetage (6) se situe à l'extérieur de l'évidement de montage (10).
